# EUROPEAN PATENT APPLICATION

(11) **EP 2 269 495 A1**
(43) Date of publication of application: **05.01.2011**
(21) Application number: 09008494.8
(22) Date of filing: 30.06.2009
(51) Int. Cl.: A47J 43/08, A47J 43/07

(54) **Method for operating a domestic appliance and domestic appliance**

(71) Applicant: Braun GmbH, 61476 Kronberg (DE)
(72) Inventor: Riemer, Jörn, 61449 Steinbach (DE); Börger, Georg, 61449 Steinbach (DE); Ring, Martin, Dr., 61479 Glashütten (DE); Schädel, Tobias, 61350 Bad Homburg (DE)

(57) **Abstract**

The present invention relates to a method for operating a domestic appliance (2) with a motor (44) driving a processing tool (46) for processing a product comprising the steps of driving the processing tool (46) in a continuous mode by continuously energizing the motor (44), detecting the speed of the processing tool (46) and comparing the detected speed of the processing tool (46) with a predetermined speed threshold value. According to the invention the operating mode is changed such that the processing tool (46) is driven in a pulse mode by energizing the motor (44) in a pulse-like manner, if the detected speed of the processing tool (46) is equal to or falls below the predetermined speed threshold value. The present invention further relates to a domestic appliance (2).

## Description

### FIELD OF THE INVENTION

The present invention relates to a method for operating a domestic appliance with a motor driving a processing tool for processing a product comprising the steps of driving the processing tool in a continuous mode by continuously energizing the motor, detecting the speed of the processing tool and comparing the detected speed of the processing tool with a predetermined speed threshold value. The present invention further relates to a domestic appliance with a motor for driving a processing tool for processing a product, said motor being drivable in a continuous mode by continuously energizing the motor, and a control device for controlling the energization of the motor, said control device comprising a first detecting means for detecting the speed of the processing tool and a first comparing means for comparing the detected speed of the processing tool with a predetermined speed threshold value.

### BACKGROUND OF THE INVENTION

A plurality of domestic appliances or kitchen appliances, like for example hand blenders, having a power source being electrically connectable to an electrical motor for driving a processing tool is already known from the state of the art.

US 2007/0046227 A1 describes a domestic appliance in the form of a hand blender for mixing and/or comminuting food products. The known hand blender comprises an electrical motor for driving a product processing element. The electrical motor is energized by a power source. During the mixing and/or comminuting of the food product, the product processing element is driven in a continuous mode by continuously energizing the motor. There is further provided a device for measuring the rotation speed of the drive shaft of the motor. The rotation speed detected by the device for measuring the rotation speed is received by a command element of a command and demand device. The command element is capable of calculating the discrepancy between the set value of the rotation speed, i.e. the predetermined nominal speed, and the rotation speed measured by the device for measuring the rotation speed. If the discrepancy between the set value and the measured value of the rotation speed exceeds a predetermined threshold value, the command element activates an overload indicator, so that the user will be informed about said discrepancy. This may occur, if the user tries to mix or comminute a comparative hard or ductile food product, so that the rotation speed of the processing element is slowed down. However, the motor is still driven in the continuous mode. If the rotation speed remains lower than the set value for a predetermined length of time, the command element adapted to cut the power supply to the motor so that the motor and the processing element, respectively, is stopped.

The known hand blender has proved himself insofar as on the one hand the user can be made aware of the risk of the motor overheating by the overload indicator and on the other hand the motor is automatically stopped when these risks of overheating become critical. However, even if the risk of overheating is minimized, the known hand blender and the method for operating the known hand blender, respectively, has the drawback that the ability of mixing or comminuting comparative hard or ductile food products is limited.

It is therefore an object of the present invention to provide a method for operating a domestic appliance with a motor driving a processing tool for processing a product permitting the processing of comparative hard or ductile products and minimizing the risk of overheating the motor. It is a further object of the present invention to provide a domestic appliance with a motor driving a processing tool for processing a product having the afore-mentioned advantages.

### SUMMARY OF THE INVENTION

The above-mentioned problem is solved by a method and a domestic appliance as described in claims 1 and 9, respectively. Preferred and advantageous embodiments of the invention are described in the sub-claims.

The present invention is directed to a method for operating a domestic appliance. The domestic appliance may for example be a blender for mixing or comminuting food products, preferably a hand blender, more preferably a rod-shaped hand blender. The Method is used to operate a domestic appliance comprising a motor, preferably an electrical motor, driving a processing tool for processing a product, preferably a food product. The processing tool may for example be a knife, a blade etc., said processing tool preferably being rotated by the motor.

The method is also useful for domestic and other appliances and tools used outside the kitchen area. Such appliances include power drills and lawn movers. The method offers particular benefits for battery operated appliances and tools.

In a first step of the method for operating the domestic appliance, the processing tool is driven in a continuous mode by continuously energizing the motor. Thus, in this first step the motor is continuously supplied by a power source, e. g. by electrically connecting the power source to the motor. In a further step the speed, e. g. the rotation speed, of the processing tool is detected. The detection of the speed of the processing tool is preferably executed permanently in order to permit a short reaction of the system. In this connection it should be mentioned that the detection of the speed of the processing tool does not necessarily has to be carried out by way of a special speed sensor cooperating with the output shaft of the motor, the processing tool or another rotating part of the domestic appliance. In fact, it is also possible - if not preferred - to use detecting means for detecting other values of the domestic appliance, said values having a known relationship to the speed of the processing tool. In a further step the detected speed of the processing tool is compared with a predetermined speed threshold value. Said comparison of the detected speed with the predetermined speed threshold value is preferably executed permanently. In the method according to the invention the operating mode of the domestic appliance is changed such that the processing tool is driven in a pulse mode by energizing the motor in a pulse-like manner, if the detected speed of the processing tool is equal to or falls below the predetermined speed threshold value.

Thus, in contrast to the method as described in US 2007/0046227 A1 the motor is no longer energized continuously, if the detected speed of the processing tool is equal to or falls below the predetermined speed threshold value. Instead, the motor is energized in a pulse-like manner, so that the product is processed in a chopping manner. This has the effect, that even comparative hard or ductile products could be chopped or comminuted by the processing tool. Above this, during the pulse mode in which the motor is energized in a pulse-like manner, preferably in a non-continuous manner, the risk of overheating the motor is reduced. Further, if the resistance of the product has been overcome by chopping or comminuting the product during the pulse mode, the processing tool may be driven in the continuous mode again, as will be described later.

In a preferred embodiment of the method according to the invention the speed threshold value is equal to or less than 10 %, preferably equal to or less than 5 %, of a predetermined nominal speed of the processing tool. In this embodiment the nominal speed preferably corresponds to the speed of the processing tool not processing a product, i.e. to the speed of a processing tool not facing any resistance of a product to be mixed or comminuted.

In a further preferred embodiment of the method according to the invention the speed threshold value is "0", i.e. the processing tool is driven in a pulse mode, if the processing tool is blocked by the product to be processed and could no longer be moved in its moving direction.

Basically, the pulse mode may comprise first intervals and second intervals separating the first intervals, the motor being energized in both intervals but to a different extent. However, in a further preferred embodiment of the method according to the invention the pulse mode comprises first intervals, during which the motor is energized, and second intervals separating the first intervals, during which the motor is not energized. By cutting the energization during the second intervals a more effective chopping or comminuting of the product during the pulse mode could be achieved. Above this, an overload and overheating, respectively, of the motor could be effectively avoided.

In an advantageous embodiment of the method according to the invention the second intervals have a shorter length than the first intervals or the same length as the first intervals. It has been found out that the second intervals having the same length as the first intervals or preferably a shorter length than the first intervals have a positive effect on the comminuting process during the pulse mode, i.e. a more effective comminuting of the product during the pulse mode could be achieved.

In a further advantageous embodiment of the method according to the invention the length of the first intervals is in the range of 50 ms to 450 ms, preferably in the range of 150 ms to 350 ms, more preferably in the range of 225 ms to 275 ms. The best results are achieved if the length of the first intervals is in the last mentioned range. Thus, the length of the first intervals may for example be 250 ms in order to achieve an effective chopping or comminuting of the product during the pulse mode.

In a further preferred embodiment of the method according to the invention a further step is included, in which the operating mode is changed such that the processing tool is driven in the continuous mode again, if the detected speed of the processing tool exceeds the predetermined speed threshold value. Thus, the operating mode is changed to the continuous mode again, if the resistance of the product has been overcome by chopping or comminuting the same during the pulse mode.

As already mentioned before, the detection of the speed of the processing tool does not necessarily has to be carried out by way of a special speed sensor cooperating with the output shaft of the motor, the processing tool or another rotating part of the domestic appliance, as described in US 2007/0046227 A1, the latter describing a coding element being attached to the output shaft of the motor and cooperating with a stationary hall effect sensor. In order to avoid a difficult, accident-sensitive and bulky construction of the domestic appliance, in a further preferred embodiment of the method according to the invention the speed of the processing tool is detected indirectly by measuring an electrical value of the motor or/and the power source of the motor, said electrical value having a known relationship to the speed of the processing tool. Thus, the speed of the processing tool may for example be detected with the help of a simple sensing resistor, so that a domestic appliance implementing the method could have a very compact and interference-free construction.

In a further preferred embodiment of the method according to the invention the afore-mentioned electrical value corresponds to the intensity of current at the motor, such that the motor is driven in the pulse mode, if the measured intensity of current is equal to or exceeds a predetermined current threshold value. Normally, a reduction of speed of the processing tool by slowing down or blocking the same leads to an increase of the intensity of current at the motor, so that the intensity of current is a suitable electrical value for detecting the speed of the processing tool. In this embodiment it is further preferred, if the motor is driven in the continuous mode again as soon as the measured intensity of current falls below the predetermined current threshold value.

In a further advantageous embodiment of the method according to the invention, which constitutes an alternative to the afore-described embodiment, said electrical value corresponds to the voltage at the power source, such that the motor is driven in the pulse mode, if the measured voltage is equal to or falls below a predetermined voltage threshold value. Normally, a blockade or a slowing down of the processing tool caused by a comparative hard or ductile product to be processed leads to a voltage drop at the power source, so that the voltage at the power source is a suitable electrical value for detecting the speed of the processing tool. In this embodiment it is further preferred, if the motor is driven in the continuous mode again as soon as the measured voltage exceeds the predetermined voltage threshold value.

Another advantageous embodiment of the method according to the invention comprises the further steps of detecting the duration of the pulse mode and comparing the detected duration of the pulse mode with a predetermined duration threshold value. If the detected duration of the pulse mode is equal to or exceeds the predetermined duration threshold value the processing tool is stopped by cutting the energization of the motor. This way, an overheating and thus a damage of the motor due to overload could be avoided.

In a further advantageous embodiment of the method according to the invention the duration threshold value is equal to or less than 10 seconds, preferably equal to or less than 7 seconds, more preferably equal to or less than 4 seconds, in order to avoid an overload of the motor. It has been found out, that the mentioned duration threshold values are sufficient, such that there is enough time during the pulse mode to chop or comminute the comparative hard product, if chopping or comminuting of the product is possible at all.

In a further preferred embodiment of the method according to the invention the duration of the pulse mode is detected by counting the number of first intervals and comparing the counted number of first intervals with a predetermined number of first intervals. In this embodiment the predetermined number of first intervals is preferably equal to or less than 10, more preferably equal to or less than 6, in order to provide enough time for comminuting or chopping a comparative hard product during the pulse mode, if chopping or comminuting of the product is possible at all.

In a further preferred embodiment of the method according to the invention the domestic appliance is battery-supplied while the method comprises the further step of permitting a reenergization of the motor after cutting the energization, only if the battery-supplied domestic appliance has been connected to a separate battery charging station before. When the user tries to remove the product from the processing tool in order to eliminate the blockade after the energization of the motor has been cut, this embodiment assures that an unintended reenergization of the motor and thus a start of the processing tool occurs, which may lead to injuries, especially if the processing tool is a blade or a knife. Thus, the user may remove the product without any risk of injury and afterwards connect the domestic appliance to the separate battery charging station in order to permit a reenergization of the motor.

In a further preferred embodiment of the method according to the invention the domestic appliance is line-operated while the method comprises the further step of permitting a reenergization of the motor after cutting the energization, only if the power plug of the line-operated domestic appliance has been unplugged and plugged again before. Thus, the user may remove the product from the processing tool in order to eliminate the blockade without any risk of injury and afterwards unplug and plug the power plug of the domestic appliance in order to permit a reenergization of the motor.

The domestic appliance according to the invention, preferably a handheld domestic appliance, more preferably a hand blender, comprises a motor, preferably an electrical motor, for driving a processing tool for processing a product, preferably a food product. The motor may be driven in a continuous mode by continuously energizing the motor. There may further be provided a power source, said power source preferably being integrated into the domestic appliance. The domestic appliance according to the invention further comprises a control device for controlling the energization of the motor, said control device comprising a first detecting means for detecting the speed of the processing tool and a first comparing means for comparing the detected speed of the processing tool with a predetermined speed threshold value. According to the invention the control device is adapted to change over the continuous mode to a pulse mode, in which the motor is energized in a pulse-like manner, if the speed of the processing tool is equal to or falls below the predetermined speed threshold value. Concerning the advantages of the domestic appliance it is referred to the advantages described in connection with the method according to the invention, which apply accordingly, i.e. a domestic appliance permitting the processing of comparative hard or ductile products and minimizing the risk of overheating the motor is provided. Above this, the above described embodiments of the method and their advantages apply accordingly to preferred embodiments of the domestic appliance.

In a preferred embodiment of the domestic appliance according to the invention the speed threshold value is equal to or less than 10 %, preferably equal to or less than 5 %, of a predetermined nominal speed of the processing tool, the nominal speed preferably being the speed of the processing tool not processing a product, the threshold value more preferably being "0".

In a further preferred embodiment of the domestic appliance according to the invention the pulse mode comprises first intervals, during which the motor is energized, and second intervals separating the first intervals, during which the motor is not energized.

In an advantageous embodiment of the domestic appliance according to the invention the second intervals are having a shorter length than the first intervals or the same length as the first intervals.

In a further advantageous embodiment of the domestic appliance according to the invention the length of the first intervals is in the range of 50 ms to 450 ms, preferably in the range of 150 ms to 350 ms, more preferably in the range of 225 ms to 275 ms.

In a further preferred embodiment of the domestic appliance according to the invention the control device is adapted to change over the pulse mode to the continuous mode again, if the detected speed of the processing tool exceeds the predetermined speed threshold value.

In a further preferred embodiment of the domestic appliance according to the invention the first detecting means comprises an electrical measuring element for measuring an electrical value of the motor or/and the power source of the motor, said electrical value having a known relationship to the speed of the processing tool, The electrical measuring element is preferably formed by a sensing resistor, in order to achieve a simple, interference-free and space-saving construction of the domestic appliance.

In a further preferred embodiment of the domestic appliance according to the invention said electrical value corresponds to the intensity of current at the motor, such that the motor is driven in the pulse mode, if the measured intensity of current is equal to or exceeds a predetermined current threshold value. In this embodiment it is further preferred that the motor is driven in the continuous mode again, if the measured intensity of current falls below the predetermined current threshold value.

In a further advantageous embodiment of the domestic appliance according to the invention said electrical value corresponds to the voltage at the power source, such that the motor is driven in the pulse mode, if the measured voltage is equal to or falls below a predetermined voltage threshold value. In this embodiment it is further preferred that the motor is driven in the continuous mode again, if the measured voltage exceeds the predetermined voltage threshold value.

In another advantageous embodiment of the domestic appliance according to the invention the control device further comprises a second detecting means for detecting the duration of the pulse mode, a second comparing means for comparing the detected duration of the pulse mode with a predetermined duration threshold value and a safety switch, the safety switch being switchable between a first mode, in which the energization of the motor is basically permitted, and a second mode, in which the energization of the motor is cut, i.e. in the first mode of the safety switch an energization is basically possible, even if still other conditions have to be fulfilled, while the energization of the motor with the safety switch in its second mode is not possible at all. The safety switch is adapted to be switched into the second mode, if the detected duration of the pulse mode is equal to or exceeds the predetermined duration threshold value.

In a further advantageous embodiment of the domestic appliance according to the invention said duration threshold value is equal to or less than 10 seconds, preferably equal to or less than 7 seconds, more preferably equal to or less than 4 seconds.

In a further preferred embodiment of the domestic appliance according to the invention the second detecting means is adapted to count the number of first intervals while the second comparing means is adapted to compare the counted number of first intervals with a predetermined number of first intervals. In this embodiment the predetermined number of first intervals is preferably equal to or less than 10, more preferably equal to or less than 6.

In a further preferred embodiment of the domestic appliance according to the invention the domestic appliance is battery-supplied and the control device further comprises a third detecting means for detecting if the battery-supplied domestic appliance has been connected to a separate battery charging station, the third detecting means cooperating with the safety switch such that the safety switch is switched into the first mode if the battery-supplied domestic appliance has been connected to a separate battery charging station after the safety switch has been switched into the second mode.

In a further preferred embodiment of the domestic appliance according to the invention the domestic appliance is line-operated and the control device further comprises a third detecting means for detecting if the power plug of the line-operated domestic appliance has been unplugged, the third detecting means cooperating with the safety switch such that the safety switch is switched into the first mode if the power plug of the line-operated domestic appliance has been unplugged after the safety switch has been switched into the second mode.

### BRIEF DESCRIPTION OF THE DRAWINGS

A preferred embodiment of the present invention will now be described, by way of example only, with reference to the drawings in which
Fig. 1 shows a schematic cross-sectional side-view of a preferred embodiment of the domestic appliance according to the invention, and
Fig. 2 shows a flow chart illustrating a preferred embodiment of the method for operating the domestic appliance of Fig. 1 according to the invention.

### DETAILED DESCRIPTION OF THE DRAWINGS

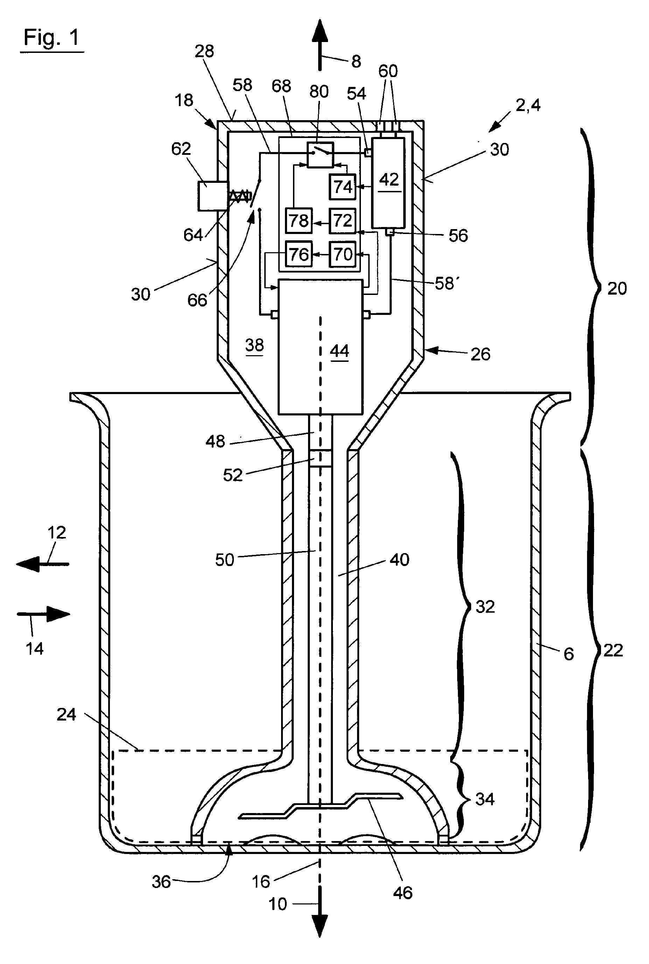

Fig. 1 shows an embodiment of the domestic appliance 2 according to the invention. The domestic appliance 2 is a handheld domestic appliance, in this case a hand blender 4 for mixing or comminuting a food product (not shown). The food product is placed in a container 6, which is no component of the hand blender 4. In Fig. 1, the opposing longitudinal directions 8, 10 and the opposing radial directions 12, 14 of the hand blender 4 are indicated by corresponding arrows.

The hand blender 4 is rod-shaped so that it is insertable in elongated containers 6 having small radial dimensions. The hand blender 4 stretches along a longitudinal axis 16, said longitudinal axis 16 running in the longitudinal directions 8, 10. The hand blender 4 comprises a housing 18 for accommodating the further components of the hand blender 4.

The housing 18 of the hand blender 4 is divided into an upper housing portion 20 and a lower housing portion 22 following in the longitudinal direction 10, said lower housing portion 22 facing and at least partially extending into the work area 24 of the hand blender 4. The work area 24 is indicated by a dashed line in Fig. 1. While the lower housing portion 22 at least partially extends into the work area 24 of the hand blender 4, the upper housing portion 20 is placed at a distance from the work area 24, i.e. the upper housing portion 20 is placed upwards in the longitudinal direction 8.

The upper housing portion 20 of housing 18 forms an elongated handhold 26, which could be easily grasped by one of the user's hands (not shown). The handhold 26 comprises a front side 28 forming the end of the upper housing portion 20 in the longitudinal direction 8 and facing away from the work area 24 and the lower housing portion 22, respectively. The handhold 26 further comprises transverse sides 30 facing in the radial directions 12. Thus, the user's thumb could be supported on the front side 28 of the handhold 26, while the other fingers and the palm of the same hand could be supported on the transverse sides 30 of the handhold 26.

The lower housing portion 22 is detachably mounted on the upper housing portion 20 and the handhold 26, respectively, so that the whole lower housing portion 22 could be released from the handhold 26 and replaced with another component. The lower housing portion 22 may further be subdivided into a tubular section 32 being connected to the upper housing portion 20 and a bell-shaped section 34 following in the longitudinal direction 10, said bell-shaped section 34 having an opening 36 being directed into the longitudinal direction 10. Thus, the food product may enter the bell-shaped section 34 in order to reach the processing tool, which will be described later. However, even the fingers of a user or another body part may enter the bell-shaped section 34 via opening 36 so that there is a high risk of injury if the processing tool is still driven or started again while the user's fingers reach into the bell-shaped section 34. Among other things, the present invention helps to reduce this risk of injury.

The upper housing portion 20 and the handhold 26, respectively, enclose a first accommodation space 38, while the lower housing portion 22 encloses a second accommodation space 40. Inside the first accommodation space 38 there is arranged a power source 42 and an electrical motor 44 for driving the aforementioned processing tool 46 for processing the food product. The processing tool 46 may for example be a mixing tool, a knife or a blade, the latter being shown in Fig. 1. The processing tool 46 is arranged inside the bell-shaped section 34 of the lower housing portion 22 and coupled with an output shaft 48 of the electrical motor 44 via a working shaft 50 extending through the second accommodation space 40 inside the tubular section 32 of the lower housing portion 22 and along the longitudinal axis 16. Thus, the longitudinal axis 16 may also be referred to as the rotation axis of the hand blender 4. In this embodiment, the working shaft 50 is coupled with the output shaft 48 via an unlockable coupling 52. Since the coupling 52 is unlockable, the lower housing portion 22, the working shaft 50 and the processing tool 46 being attached thereto may be detached from the hand blender 4.

In the shown embodiment, the power source 42 is integrated into the hand blender 4 and formed by at least one rechargeable battery, so that the hand blender 4 is designed to be operated off the line, i.e. the hand blender 4 is battery-supplied. The power source 42 further comprises a first and a second pole 54, 56 forming the electrical connections of the power source 42. The first pole 54 may be electrically connected to the motor 44 via a first line 58, while the second pole 56 is electrically connected to the motor 44 via a second line 58', so that an energization of the motor 44 and thus a start of the motor 44 and the processing tool 46, respectively, is possible.

The rechargeable power source 42 further comprises electrical contacts 60 for recharging the power source 42. The electrical contacts 60 are provided at the front side 28 of the upper housing portion 20. Thus, the hand blender 4 should preferably be delivered in a set comprising the hand blender 4 and a separate battery charging station (not shown), said battery charging station comprising corresponding electrical contacts being connectable to the electrical contacts 60 of the power source 42 in order to recharge the power source 42. It is preferred if the battery charging station comprises a receptacle for receiving the front side 28 and at least a part of the upper housing portion 20, so that the hand blender 4 may be inserted into said receptacle in the longitudinal direction 8, thereby establishing a connection between the electrical contacts 60 at the front side 28 of the upper housing portion 20 and the electrical contacts at the battery charging station.

The hand blender 4 further comprises a mechanical switch 62, which may also be referred to as the ON/OFF-switch of the hand blender 4. The mechanical switch 62 is provided at the transverse side 30 of the upper housing portion 20 and the handhold 26, respectively, and may be switched manually from an OFF position, shown in Fig. 1, into an ON position (not shown) by pressing down the mechanical switch 62 in radial direction 14. The mechanical switch 62 is biased into its OFF position by way of a spring element 64, which is formed by a coil spring in this embodiment, so that the mechanical switch 62 automatically returns into its OFF position if the mechanical switch 62 is released.

The mechanical switch 62 cooperates with an electrical switch 66, said electrical switch 66 being provided in line 58. The electrical switch 66 cooperates with the mechanical switch 62 such that the electrical switch 66 is opened if the mechanical switch 62 is switched into its OFF position, while the electrical switch 66 is closed if the mechanical switch 62 is switched into its ON position. Thus, in the ON position of the mechanical switch 62 the electrical switch 66 connects the first pole 54 of the power source 42 to the motor 44 by closing line 58, while in the OFF position of the mechanical switch 62 the electrical switch 66 disconnects said pole 54 of the power source 42 from the motor 44 by interrupting line 58.

Inside the first accommodation space 38 there is further provided a control device 68 for automatically controlling the energization of the motor 44 by the power source 42. The control device 68 is especially capable of changing the operation mode of the motor 44 between a continuous mode, in which the motor 44 is continuously energized by the power source, and a pulse mode, in which the motor 44 is energized in a pulse-like manner.

The control device 68 comprises a first detecting means 70, a second detecting means 72, a third detecting means 74, a first comparing means 76, a second comparing means 78 and an electrical safety switch 80. The mentioned components will be described hereinafter.

The first detecting means 70 serves to detect the speed of the processing tool 46 during operation. In this embodiment, the first detecting means 70 is formed by an electrical measuring element, more precisely a sensing resistor, for measuring an electrical value of the electrical motor 44, said electrical value having a known relationship to the speed of the processing tool 46. In this case, the detecting means 70 is capable of measuring the intensity of current at the motor 44. The intensity of current at the motor 44 increases if the speed of the processing tool 46 decreases, while the intensity of current decreases if the speed of the processing tool 46 increases, so that there is a known relationship between the intensity of current at the motor 44 and the speed of the processing tool 46.

Alternatively, the first detecting means 70 and the electrical measuring element, respectively, may be capable of measuring the voltage at the power source 42. The voltage at the power source 42 increases if the speed of the processing tool 46 increases, while the voltage at the power source 42 drops if the speed of the processing tool 46 decreases, so that there is a known relationship between the voltage at the power source 42 and the speed of the processing tool 46.

The first comparing means 76 is capable of comparing the speed of the processing tool 46 detected by the first detecting means 70 with a predetermined speed threshold value. The above-mentioned speed threshold value is equal to or less than 10 %, preferably equal to or less than 5 %, of a predetermined nominal speed of the processing tool 46, while the nominal speed corresponds to the speed of the processing tool 46 not processing a product. In this embodiment, the speed threshold value is "0", i.e. the speed of the processing tool 46 is equal to the speed threshold value, if the processing tool 46 is blocked by the food product, so that it does not rotate any longer.

If the speed of the processing tool 46 is equal to or falls below the predetermined speed threshold value, the control device 68 is adapted to change over the continuous mode to the above-mentioned pulse mode. On the other hand, if the detected speed of the processing tool 46 exceeds the predetermined speed threshold value, the control device is adapted to change over the pulse mode to the continuous mode again. Thus, in this embodiment, in which the intensity of current at the motor 44 is the electrical value to be measured by the first detecting means 70, the motor 44 is driven in the pulse mode, if the measured intensity of current is equal to or exceeds a predetermined current threshold value, and in the continuous mode again, if the measured intensity of current falls below the predetermined current threshold value. In an alternative embodiment, in which the voltage at the power source 42 is the electrical value to be measured by the first detecting means 70, the motor 44 is driven in the pulse mode, if the measured voltage is equal to or falls below a predetermined voltage threshold value, and in the continuous mode again, if the measured voltage exceeds the predetermined voltage threshold value.

The afore-mentioned pulse mode comprises first intervals, during which the motor 44 is energized, and second intervals separating the first intervals, during which the motor 44 is not energized. At the same time, the second intervals are having a shorter length than the first intervals or the same length as the first intervals. The length of the first intervals are preferably in the range of 50 ms to 450 ms, 150 ms to 350 ms or/and 225 ms to 275 ms.

The second detecting means 72 is adapted to detect the duration of the pulse mode, if the operating mode has been changed over to the pulse mode. The duration of the pulse mode may preferably be detected by counting the number of first intervals. However, the duration of the pulse mode may alternatively or additionally be detected by timing.

The second comparing means 78 is adapted to compare the duration of the pulse mode detected by the second detecting means 72 with a predetermined duration threshold value. In case of a second detecting means 72 counting the number of first intervals, the duration threshold value and a predetermined number of first intervals, respectively, is preferably equal to or less than 10, more preferably equal to or less than 6. In case of a second detecting means 72 executing a timing, the duration threshold value and a predetermined time limit, respectively, is preferably equal to or less than 10 seconds, more preferably equal to or less than 7 or 4 seconds.

The above-mentioned safety switch 80 is provided in line 58 connecting the first pole of the power source 42 with the motor 44, the mode of the safety switch 80 essentially being controlled as a result of the duration of the pulse mode. The safety switch 80 is automatically switchable between a first mode, in which the safety switch 80 is closed, so that an energization of the motor 44 via line 58 is basically permitted, and a second mode, in which the safety switch 80 is opened, so that an energization of the motor 44 via line 58 is cut and disabled, respectively. The safety switch 80 is adapted to be automatically switched into the second mode, if the duration of the pulse mode detected by the second detecting means 72 is equal to or exceeds the predetermined duration threshold value.

In the shown battery-supplied hand blender 4, the third detecting means 74 is capable of detecting if the battery-supplied hand blender 4 has been connected to a separate battery charging station or not. The third detecting means 74 cooperates with the safety switch 80 such that the safety switch 80 is automatically switched into the first mode again if the electrical contacts 60 of the hand blender 4 have been connected to corresponding electrical contacts at the afore-mentioned separate battery charging station after the safety switch 80 has been switched into the second mode. In an alternative embodiment (not shown), in which the hand blender 4 is line-operated, the third detecting means 74 is capable of detecting if the power plug of the hand blender 4 has been unplugged or not. In this case, the third detecting means 74 cooperates with the safety switch 80 such that the safety switch is automatically switched into the first mode again if the power plug of the hand blender 4 has been unplugged after the safety switch 80 has been switched into the second mode.

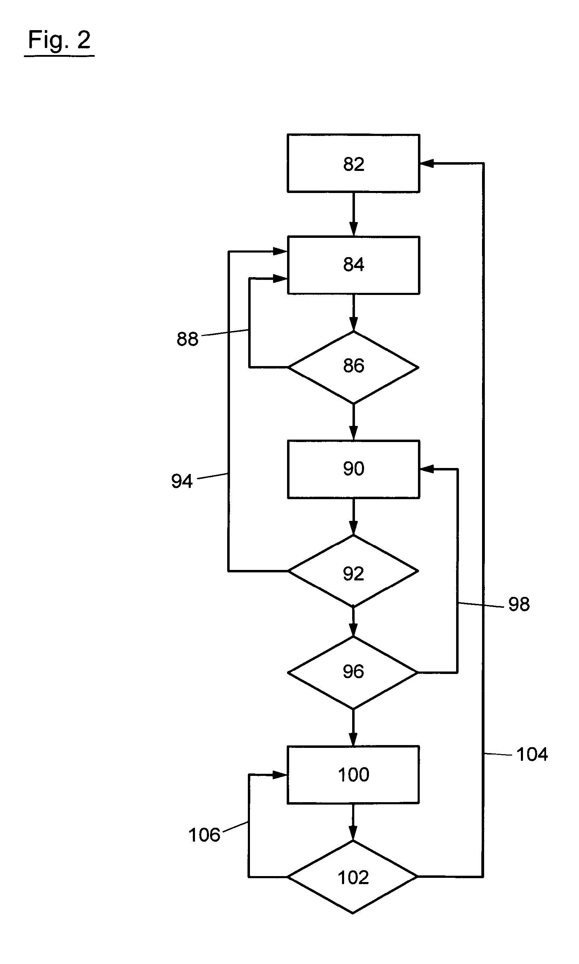

Hereinafter, a preferred embodiment of the method according to the invention for operating the domestic appliance 2 of Fig. 1 will be described with reference to Fig. 2.

In step 82, the user has the opportunity to start the processing tool 46 of the hand blender 4 by manually moving the mechanical switch 62 and the electrical switch 66, respectively, into its ON position, so that an energization of the motor 44 via lines 58, 58' is established, provided that the safety switch 80 is switched into its first mode. Thus, in step 84 the processing tool 46 is driven in the continuous mode by continuously energizing the motor 44. Now, the rotating processing tool 46 may mix or comminute a food product in the work area 24 of the hand blender 4.

During the continuous mode (step 84) the speed of the processing tool 46 is permanently detected by the first detecting means 70 and compared with the predetermined speed threshold value by the first comparing means 76 (step 86). If the detected speed of the processing tool 46 remains above the predetermined speed threshold value, the continuous mode is kept, as indicated by arrow 88 in Fig. 2. However, if the detected speed of the processing tool 46 is equal to or falls below the predetermined speed threshold value, which might be the case, if the food product is comparative hard or ductile, the operating mode is changed such that the processing tool 46 is driven in the pulse mode by energizing the motor 44 in a pulse-like manner (step 90).

The pulse mode, in which the motor 44 is energized in a pulse-like manner, has the effect, that even a comparative hard or ductile food product, which could not be mixed or comminuted during a continuous mode, will be chopped or comminuted by the processing tool. Above this, during the pulse mode the risk of overheating the motor 44 is reduced.

During the pulse mode (step 90) the speed of the processing tool 46 is still detected by the first detecting means 70 and compared to the speed threshold value by the first comparing means 76 (step 92). If the detected speed of the processing tool 46 exceeds the predetermined speed threshold value during the further operation, which might be the case if the hard or ductile food product has been successfully chopped or comminuted during the pulse mode, the operating mode of the hand blender 4 is changed such that the processing tool 46 is driven in the continuous mode again, as indicated by arrow 94 in Fig. 2.

Above this, during the pulse mode (step 90) the duration of the pulse mode is detected by the second detecting means 72 and compared with the predetermined duration threshold value by the second comparing means 78 (step 96). If the detected duration of the pulse mode is lower than the duration threshold value, the pulse mode will be kept, as indicated by arrow 98 in Fig. 2. However, if the detected duration of the pulse mode is equal to or exceeds the predetermined duration threshold value, the processing tool 46 will be stopped by automatically switching the safety switch 80 into its second mode, thereby cutting or disabling the energization of the motor 44 via line 58 (step 100). This way, an overheating of the motor 44 could be avoided.

In step 100, the motor 44 and thus the processing tool 46 is stopped, so that the user has the possibility to remove the food product from the processing tool 46, which has led to a blockade of the same. Said food product could be removed from the processing tool 46 by the fingers of the user without any risk of injury, since the motor 44 and the processing tool 46, respectively, could not be started again even if the mechanical switch is still or again pressed down into its ON position. This is traced back to the fact, that the safety switch 80 in its second mode prevents the motor 44 from being energized again. In order to avoid an unintended switching of the safety switch 80 into its first mode, in which a reenergization of the motor 44 is basically possible, there is provided a further step 102.

In step 102, the third detecting device 74 detects whether the electrical contacts 60 of the battery-supplied hand blender 4 have been connected to corresponding electrical contacts of the separate battery charging station (not shown) after the energization of the motor 44 has been cut by safety switch 80. Only if this is this case, the reenergization of the motor 44 by automatically switching the safety switch 80 into its first mode is permitted, as indicated by arrow 104 in Fig. 2. Now, the user simply has to actuate the mechanical switch 62 again (step 82) to start the motor (step 84). Otherwise, the safety switch 80 will remain in its second mode, as indicated by arrow 106 in Fig. 2.

In an alternative embodiment of the method, in which the hand blender 4 is line-operated, during step 102 a reenergization of the motor 44 after cutting the energization is only permitted by automatically switching the safety switch 80 back into its first mode, if the power plug of the line-operated hand blender 4 has been unplugged and plugged again before.

Further features of the method described with reference to Fig. 2 are derivable from the description of the domestic appliance 2 with reference to Fig. 1.

## Claims

1. Method for operating a domestic appliance (2) with a motor (44) driving a processing tool (46) for processing a product, preferably a food product, comprising the steps of driving the processing tool (46) in a continuous mode by continuously energizing the motor (44),
detecting the speed of the processing tool (46) and
comparing the detected speed of the processing tool (46) with a predetermined speed threshold value,
**characterised by** changing the operating mode such that the processing tool (46) is driven in a pulse mode by energizing the motor (44) in a pulse-like manner, if the detected speed of the processing tool (46) is equal to or falls below the predetermined speed threshold value.

2. Method for operating a domestic appliance (2) according to claim 1 in which the speed threshold value is equal to or less than 10 %, preferably equal to or less than 5 %, of a predetermined nominal speed of the processing tool (46), the nominal speed preferably being the speed of the processing tool (46) not processing a product, the threshold value more preferably being "0".

3. Method for operating a domestic appliance (2) according to one of the preceding claims in which the pulse mode comprises first intervals, during which the motor (44) is energized, and second intervals separating the first intervals, during which the motor (44) is not energized, the second intervals preferably having a shorter length than the first intervals or the same length as the first intervals, the length of the first intervals more preferably being in the range of 50 ms to 450 ms, 150 ms to 350 ms or/and 225 ms to 275 ms.

4. Method for operating a domestic appliance (2) according to one of the preceding claims with the further step of changing the operating mode such that the processing tool (46) is driven in the continuous mode again, if the detected speed of the processing tool (46) exceeds the predetermined speed threshold value.

5. Method for operating a domestic appliance (2) according to one of the preceding claims in which the speed of the processing tool (46) is detected indirectly by measuring an electrical value of the motor or/and the power source (42) of the motor (44), said electrical value having a known relationship to the speed of the processing tool (46),
said electrical value preferably being the intensity of current at the motor (44), such that the motor (44) is driven in the pulse mode, if the measured intensity of current is equal to or exceeds a predetermined current threshold value, and more preferably in the continuous mode, if the measured intensity of current falls below the predetermined current threshold value,
or said electrical value preferably being the voltage at the power source (42), such that the motor (44) is driven in the pulse mode, if the measured voltage is equal to or falls below a predetermined voltage threshold value, and more preferably in the continuous mode, if the measured voltage exceeds the predetermined voltage threshold value.

6. Method for operating a domestic appliance (2) according to one of the preceding claims with the further steps of
detecting the duration of the pulse mode,
comparing the detected duration of the pulse mode with a predetermined duration threshold value and
stopping the processing tool (46) by cutting the energization of the motor (44), if the detected duration of the pulse mode is equal to or exceeds the predetermined duration threshold value, said duration threshold value preferably being equal to or less than 10 seconds, more preferably equal to or less than 7 or 4 seconds.

7. Method for operating a domestic appliance (2) according to claim 6 in which the duration of the pulse mode is detected by counting the number of first intervals and comparing the counted number of first intervals with a predetermined number of first intervals, the predetermined number of first intervals preferably being equal to or less than 10, more preferably equal to or less than 6.

8. Method for operating a domestic appliance (2) according to one of claims 6 or 7, the domestic appliance (2) being battery-supplied or line-operated, with the further step of permitting a reenergization of the motor (44) after cutting the energization, only
if the battery-supplied domestic appliance (2) has been connected to a separate battery charging station before
or if the power plug of the line-operated domestic appliance (2) has been unplugged and plugged again before.

9. Domestic appliance (2), preferably a handheld domestic appliance (2), more preferably a hand blender (4), with a motor (44) for driving a processing tool (46) for processing a product, preferably a food product, said motor (44) being drivable in a continuous mode by continuously energizing the motor (44), and a control device (68) for controlling the energization of the motor (44), said control device (68) comprising a first detecting means (70) for detecting the speed of the processing tool (46) and a first comparing means (76) for comparing the detected speed of the processing tool (46) with a predetermined speed threshold value, **characterised in that** the control device (68) is adapted to change over the continuous mode to a pulse mode, in which the motor (44) is energized in a pulse-like manner, if the speed of the processing tool (46) is equal to or falls below the predetermined speed threshold value.

10. Domestic appliance (2) according to claim 9, **characterised in that** the speed threshold value is equal to or less than 10 %, preferably equal to or less than 5 %, of a predetermined nominal speed of the processing tool (46), the nominal speed preferably being the speed of the processing tool (46) not processing a product, the threshold value more preferably being "0".

11. Domestic appliance (2) according to one of claims 9 or 10, **characterised in that** the pulse mode comprises first intervals, during which the motor (44) is energized, and second intervals separating the first intervals, during which the motor (44) is not energized, the second intervals preferably having a shorter length than the first intervals or the same length as the first intervals, the length of the first intervals more preferably being in the range of 50 ms to 450 ms, 150 ms to 350 ms or/and 225 ms to 275 ms.

12. Domestic appliance (2) according to one of claims 9 to 11, **characterised in that** the control device (68) is adapted to change over the pulse mode to the continuous mode again, if the detected speed of the processing tool (46) exceeds the predetermined speed threshold value.

13. Domestic appliance (2) according to one of claims 9 to 12, **characterised in that** the first detecting means (70) comprises an electrical measuring element, preferably a sensing resistor, for measuring an electrical value of the motor (44) or/and the power source (42) of the motor (44), said electrical value having a known relationship to the speed of the processing tool (46),
said electrical value preferably being the intensity of current at the motor (44), such that the motor (44) is driven in the pulse mode, if the measured intensity of current is equal to or exceeds a predetermined current threshold value, and more preferably in the continuous mode, if the measured intensity of current falls below the predetermined current threshold value,
or said electrical value preferably being the voltage at the power source (42), such that the motor (44) is driven in the pulse mode, if the measured voltage is equal to or falls below a predetermined voltage threshold value, and more preferably in the continuous mode, if the measured voltage exceeds the predetermined voltage threshold value.

14. Domestic appliance (2) according to one of claims 9 to 13, **characterised in that** the control device (68) further comprises a second detecting means (72) for detecting the duration of the pulse mode, a second comparing means (78) for comparing the detected duration of the pulse mode with a predetermined duration threshold value and a safety switch (80), the safety switch (80) being switchable between a first mode, in which the energization of the motor (44) is basically permitted, and a second mode, in which the energization of the motor (44) is cut, the safety switch (80) being adapted to be switched into the second mode, if the detected duration of the pulse mode is equal to or exceeds the predetermined duration threshold value, said duration threshold value preferably being equal to or less than 10 seconds, more preferably equal to or less than 7 or 4 seconds.

15. Domestic appliance (2) according to claim 14, **characterised in that** the domestic appliance (2) is battery-supplied or line-operated and the control device (68) further comprises a third detecting means (74) for detecting if the battery-supplied domestic appliance (2) has been connected to a separate battery charging station or the power plug of the line-operated domestic appliance (2) has been unplugged, the third detecting means (74) cooperating with the safety switch (80) such that the safety switch (80) is switched into the first mode if the battery-supplied domestic appliance (2) has been connected to a separate battery charging station or the power plug of the line-operated domestic appliance (2) has been unplugged after the safety switch (80) has been switched into the second mode.
